# DEMANDE DE BREVET EUROPEEN

(11) **EP 2 535 823 A2**
(43) Date de publication de la demande: **19.12.2012**
(21) Numéro de dépôt: 12172208.6
(22) Date de dépôt: 15.06.2012
(51) Int. Cl.: G06F 17/27, G06F 9/44

(54) **Procédé, serveur et système de mise à disposition d'applications sur un terminal de communication**

(30) Priorité: 16.06.2011 FR 1155279
(71) Demandeur: FRANCE TELECOM, 75015 Paris (FR)
(72) Inventeur: Courval, Lionel, 14210 Amaye sur Orne (FR); Zimmerman, Julien, 14460 Collombelles (FR); Bertin, Emmanuel, 14530 Luc-sur-Mer (FR)
(74) Mandataire: Le Noane, Karine

(57) **Abrégé**

L'invention concerne un procédé de mise à disposition d'au moins une application (140) sur un terminal de communication (110).

Selon l'invention, le procédé comprend une étape de détermination automatique (130) de ladite application en fonction d'au moins une information contextuelle dudit terminal (110), ladite au moins une information contextuelle étant obtenue à partir d'un contexte physique dudit terminal, et/ou d'un contexte relatif à une application en cours d'exécution sur le terminal, et/ou d'un contexte communautaire du terminal.

## Description

### 1. DOMAINE DE L'INVENTION

La présente invention se rapporte de manière générale au domaine des télécommunications, et en particulier, au domaine des terminaux de communication, destinés à divers types d'utilisateur, par exemple à des professionnels ou à des particuliers.

Plus précisément, l'invention concerne les interactions homme-machine au sein d'un terminal de communication concourant à la réalisation d'une activité sur ce terminal.

### 2. ART ANTERIEUR

A ce jour, les utilisateurs disposent de multiples applications sur leurs terminaux de communication, qu'il s'agisse d'un ordinateur personnel, d'un terminal mobile, ou d'une tablette. Ces applications sont le plus souvent indépendantes les unes des autres. Il existe des mécanismes de fédération d'applications permettant de simplifier le passage d'une application à une autre application. Cependant, ces mécanismes se limitent à fournir des raccourcis d'accès au sein d'un environnement applicatif statique. C'est à l'utilisateur de rechercher puis de lancer les applications qu'il désire utiliser.

La présente demande d'invention vise donc à apporter une solution à la problématique générale d'enrichissement de l'interaction homme-machine d'un terminal de communication, pour offrir une interface à la fois plus simple et plus ergonomique à un utilisateur.

### 3. EXPOSE DE L'INVENTION

L'invention propose une solution nouvelle qui ne présente pas l'ensemble de ces inconvénients de l'art antérieur, sous la forme d'un procédé de mise à disposition d'au moins une application sur un terminal de communication.

Selon l'invention, le procédé comprend une étape de détermination automatique d'au moins une application en fonction d'au moins une information contextuelle du terminal, l'au moins une information contextuelle étant obtenue à partir d'un contexte physique du terminal, et/ou d'un contexte relatif à une application en cours d'exécution sur le terminal, et/ou d'un contexte communautaire du terminal.

L'invention permet de proposer automatiquement sur le terminal, voire de lancer, des applications choisies en fonction du contexte dans lequel ce terminal se trouve, par exemple des applications nécessaires et/ou complémentaires à une application principale en cours d'exécution sur le terminal, sans que l'utilisateur du terminal ait besoin de rechercher ces applications, et/ou de s'occuper de leur lancement.

La solution de l'invention permet ainsi de fluidifier les activités d'un utilisateur et donc de lui apporter un gain de temps significatif. Elle permet également de limiter la complexité, telle que perçue par l'utilisateur, d'une activité faisant intervenir plusieurs applications, et d'améliorer ainsi considérablement le confort d'usage de l'utilisateur.

Selon une caractéristique particulière de l'invention, l'information contextuelle appartient au groupe comprenant :
- un contexte physique du terminal ;
- un contexte relatif à une application en cours d'exécution sur le terminal ;
- un contexte communautaire du terminal ou d'une application en cours d'exécution sur le terminal.

L'invention offre ainsi l'avantage d'adapter les applications à mettre à disposition à la fois selon le terminal lui-même, notamment en fonction de ses capacités, mais également selon un contexte dynamique, lié à une activité en cours d'exécution sur le terminal, et/ou selon son environnement physique, notamment sa géolocalisation, et/ou son environnement logique, notamment en lien avec une communauté de contacts. Elle permet donc à l'utilisateur de disposer d'un environnement de travail adaptatif, intelligent, qui analyse l'environnement de l'utilisateur dans son ensemble pour mieux anticiper ses besoins.

Selon une caractéristique particulière de l'invention, le procédé de mise à disposition comprend une étape d'analyse syntaxique et/ou sémantique d'au moins un événement se produisant sur le terminal, pour générer au moins une information contextuelle du terminal.

Ce mode de mise en oeuvre de l'invention offre à un utilisateur une solution enrichie, en analysant par exemple des requêtes de l'utilisateur, ou des évènements survenant de façon consécutive à une application s'exécutant sur le terminal (par exemple une application de type courriel), pour en extraire des informations contextuelles (par exemple une suite de caractères précédant un caractère « @ » et susceptible de correspondre au nom d'un contact), puis utilise notamment les informations contextuelles extraites pour déterminer et/ou personnaliser ensuite les applications à mettre à disposition (par exemple en positionnant un agenda électronique sur un prochain rendez-vous avec un contact dont le nom ressemble à la suite de lettres extraite).

De ce fait, la solution de l'invention permet de proposer à l'utilisateur des applications particulièrement adaptées à son activité courante.

Selon une caractéristique particulière de l'invention, l'étape de détermination d'une application comprend une étape de sélection dans au moins une table de correspondance d'au moins une application associée à au moins une des informations contextuelles.

Il peut s'agir d'une table de correspondance dédiée au terminal ou d'une table de correspondance commune à une communauté de terminaux. Ainsi, l'invention offre l'avantage de permettre, voire d'imposer, au sein d'une communauté, par exemple une entreprise ou une équipe de développement, le lancement systématique d'un même ensemble d'applications pour une même information contextuelle ou un même type d'activité. De ce fait, l'invention contribue à une organisation méthodologique de la communauté. D'une part, cet ensemble d'applications peut agir comme un pense-bête afin que chaque utilisateur pense à effectuer toutes les tâches requises en liaison avec une information contextuelle particulière (par exemple, pour un commercial, remplir une fiche téléphonique lors de chaque appel entrant ou sortant, noter dans un agenda électronique la prochaine relance du client, etc... ). D'autre part, l'invention permet de simplifier et de fiabiliser les échanges au sein de la communauté, par exemple une équipe projet, en promouvant l'usage d'applications communes.

Selon un autre mode de réalisation, la solution de l'invention permet un paramétrage spécifique au terminal ou à son utilisateur, des applications à mettre à disposition, associées à une information contextuelle. Ainsi, grâce à l'invention, un utilisateur peut ensuite se voir proposer automatiquement un environnement adapté à ses souhaits. Les applications proposées sur un terminal peuvent être adaptées à ce terminal, notamment à ses capacités physiques ou à son environnement, en particulier à l'existence d'une connexion à un réseau de communication par exemple.

L'invention offre de plus l'avantage de filtrer les applications obtenues notamment en fonction d'autres informations contextuelles du terminal ou en fonction d'informations déduites d'informations contextuelles, contenues par exemple dans des tables de correspondance de contacts d'une même communauté, ou associées à un classement des contacts de la communauté dans un graphe de réseau social de l'utilisateur du terminal.

Ainsi, en sélectionnant de préférence une application également présente dans une table de correspondance dédiée à un terminal tiers appartenant à une même communauté, la solution de l'invention permet par exemple de favoriser l'émergence de standards applicatifs au sein d'une communauté de terminaux et/ou de contacts.

Selon un mode de réalisation particulier de l'invention , l'étape de sélection comprend :
- une étape d'identification, sur la base d'au moins une des informations contextuelles, d'une exécution d'au moins une séquence prédéterminée d'applications ;
- une étape de mémorisation d'au moins une information contextuelle représentative de l'exécution de la séquence, fonction de l'ordonnancement, dans la séquence, des applications de la séquence.

Par la reconnaissance d'une séquence d'applications en cours d'exécution sur le terminal, la solution de l'invention permet de tenir compte d'un éventuel ordonnancement des applications dans la séquence, pour la sélection des applications à mettre à disposition. En particulier, il peut être tenu compte des applications déjà en cours d'exécution sur le terminal.

Selon un mode de réalisation particulier de l'invention, le procédé de mise à disposition comprend :
- une étape de présentation de l'application sélectionnée lors de l'étape de sélection ;
- une étape de mémorisation d'un indicateur de pertinence de l'application présentée, en relation avec l'au moins une information contextuelle du terminal.

L'invention permet notamment de mémoriser l'utilisation faite par l'utilisateur des applications proposées : par exemple, il est prévu dans certains modes de réalisation de mémoriser si une application lancée a été effectivement utilisée, le nombre de fois où elle a été utilisée, ou si au contraire elle a été immédiatement fermée.

Selon une caractéristique particulière de l'invention, l'étape de sélection tient compte d'au moins un indicateur de pertinence préalablement mémorisé.

En effet, dans certains modes de réalisation, la solution de l'invention tient compte, lors de la sélection d'une application, de la pertinence qui lui est associée, telle qu'elle a été évaluée lors d'au moins un lancement précédent de l'application. Ainsi, l'invention permet non seulement de tenir compte des préférences de l'utilisateur définies explicitement par l'utilisateur ou par un tiers, l'administrateur système de son entreprise par exemple, mais, de façon alternative ou complémentaire, des préférences détectées en fonction des habitudes de l'utilisateur. Ainsi, l'invention permet un paramétrage automatique du terminal. Elle offre donc à un utilisateur un gain de temps et une finesse de réglage appréciable.

En particulier, l'invention permet de mettre à disposition en priorité ou exclusivement les applications les plus adaptées aux usages de l'utilisateur, et au contraire d'éviter de proposer par défaut à l'utilisateur des applications indésirables, par exemple parce qu'elles ont systématiquement été fermées par l'utilisateur dès leur mise à disposition.

Selon une caractéristique particulière de l'invention, le procédé de mise à disposition comprend en outre une étape de paramétrage automatique de l'application à mettre à disposition en fonction d'au moins une des informations contextuelles.

Ainsi, la solution de l'invention utilise les informations contextuelles du terminal pour préciser le contexte applicatif de l'application lancée, par exemple en remplissant automatiquement certains champs. De ce fait, l'invention permet de proposer à l'utilisateur une application personnalisée selon le contexte de son terminal. De ce fait, elle permet d'une part de simplifier, pour l'utilisateur, l'usage des applications lancées en masquant une éventuelle complexité de leur paramétrage, et permet d'autre part d'obtenir un confort accru, un gain de temps, et une diminution des erreurs de saisie.

Selon une caractéristique particulière de l'invention, le procédé de mise à disposition comprend en outre une étape de mémorisation dans la table de correspondance d'au moins un identifiant d'une application en cours d'exécution sur le terminal, en association avec au moins une des informations contextuelles.

De cette façon, la table de correspondance est enrichie avec les applications effectivement utilisées sur le terminal, et en particulier avec des applications, non présentées automatiquement, que l'utilisateur a de lui-même lancées sur le terminal. Ainsi, la solution de l'invention rend possible une détermination empirique, basée sur un apprentissage, des applications à mettre à disposition sur le terminal. De ce fait, elle permet d'améliorer au fil du temps l'offre de services produite à l'utilisateur, en enrichissant, suite aux choix effectifs de l'utilisateur, la palette d'applications à présenter.

L'identifiant mémorisé pourra être accompagné d'un ou plusieurs paramètres propres à l'application considérée, ce qui permettra de réutiliser certains de ces paramètres lors du lancement ultérieur de l'application. De ce fait, l'utilisateur peut disposer d'un environnement plus adapté à son besoin sans avoir à positionner ces paramètres lorsqu'il utilise l'application pour une activité proche ou identique.

Selon un autre aspect, l'invention concerne un terminal de communication comprenant des moyens de mise à disposition d'au moins une application, et comprenant en outre des moyens de détermination automatique d'au moins une application en fonction d'au moins une information contextuelle du terminal, l'au moins une information contextuelle étant obtenue à partir d'un contexte physique du terminal, et/ou d'un contexte relatif à une application en cours d'exécution sur le terminal, et/ou d'un contexte communautaire du terminal.

Dans ce mode de réalisation, la table de correspondance mémorisant des identifiants d'application en lien avec une information contextuelle peut être implantée localement sur le terminal. Ainsi, elle peut être accessible depuis le terminal même lorsque celui-ci n'est connecté à aucun réseau. De cette façon, l'invention permet de proposer à un utilisateur un environnement dédié, adapté à ses activités, même lorsque son terminal n'est connecté à aucun réseau de communication.

Selon encore un autre aspect, l'invention concerne un serveur comportant des moyens de mise à disposition d'au moins une application sur au moins un terminal de communication et comprenant en outre des moyens de détermination automatique d'au moins une application en fonction d'au moins une information contextuelle du terminal, l'au moins une information contextuelle étant obtenue à partir d'un contexte physique du terminal, et/ou d'un contexte relatif à une application en cours d'exécution sur le terminal, et/ou d'un contexte communautaire du terminal.

Ainsi, la solution de l'invention peut être mise en oeuvre sur un serveur de communication et non sur le terminal de communication lui-même. De cette façon, l'invention peut permettre à un utilisateur équipé d'un terminal de communication assez simple de bénéficier, par exemple par le biais d'un abonnement à un service dédié, de la solution de l'invention.

Selon encore un autre aspect, l'invention concerne un système comprenant une communauté de terminaux et un serveur, le serveur comportant des moyens de mise à disposition d'au moins une application sur au moins un terminal de communication, comprenant en outre des moyens de détermination automatique d'au moins une application en fonction d'au moins une information contextuelle du terminal, l'au moins une information contextuelle étant obtenue à partir d'un contexte physique du terminal, et/ou d'un contexte relatif à une application en cours d'exécution sur le terminal, et/ou d'un contexte communautaire du terminal.

Enfin, l'invention concerne également un programme d'ordinateur comprenant des instructions de code de programme pour la mise en oeuvre d'un procédé de mise à disposition selon l'invention lorsque ce programme est exécuté par un processeur.

### 4. LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels:
- la figure 1 présente un schéma du principe général de l'invention ;
- la figure 2 décrit un exemple de présentation d'une interface homme-machine selon l'invention ;
- la figure 3 illustre le fonctionnement dynamique du procédé de l'invention dans un mode particulier de réalisation ;
- la figure 4 décrit un exemple d'un terminal du réseau de communication selon l'invention ;
- la figure 5 décrit un exemple d'un découpage fonctionnel du moteur contextuel de l'invention.

### 5. DESCRIPTION D'UN MODE DE REALISATION DE L'INVENTION

### 5.1 Principe général

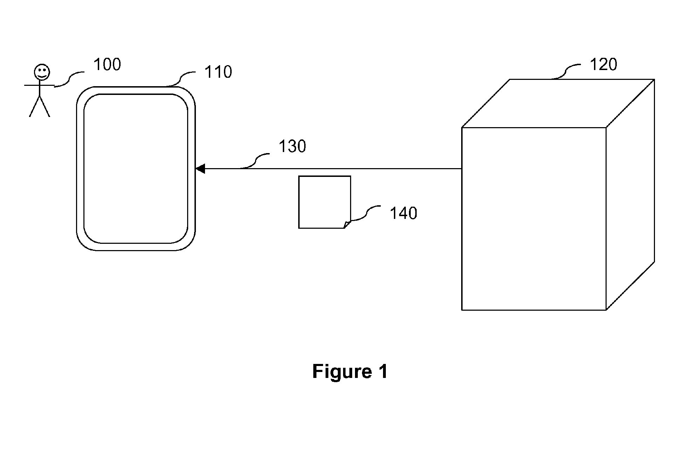

La **figure 1** présente le principe général de l'invention.

Le principe général de l'invention consiste à proposer, voire à lancer, automatiquement sur un terminal 110 utilisant le procédé de l'invention, au moins une application en fonction d'au moins un information contextuelle du terminal 110. Pour cela, le procédé selon l'invention comprend une étape de détermination 130, par un moteur contextuel prédictif 120, d'une application 140 à mettre à disposition sur le terminal 110.

Selon les modes de réalisation, cette étape de détermination peut être précédée d'un paramétrage préalable d'identifiants d'applications à mettre à disposition, en association avec certaines informations contextuelle du terminal 110.

Dans certains modes de réalisation, une information contextuelle particulière, notamment un mot clé, peut être associée à une séquence particulière d'applications. Une séquence peut ainsi rassembler des applications ayant une thématique et/ou un type commun, en ordonnançant leur mise à disposition sur le terminal. Par exemple, une séquence prédéterminée associée au mot clé « tenue réunion », pourra comprendre une application de type « agenda », une application bureautique de présentation de diapositives pour une réunion, une application de traitement de texte pour la rédaction du compte-rendu. De cette façon, plusieurs applications peuvent former une chaîne cohérente, même si elles ne sont pas temporellement consécutives.

L'information contextuelle attachée à une séquence peut être particulière à une activité de l'utilisateur du terminal (« réunion », « rédaction d'un document »...) ou à une thématique particulière (« projet X »).

Le paramétrage des applications à mettre à disposition en fonction des informations contextuelles du terminal peut également être réalisé automatiquement, grâce à un apprentissage des usages de l'utilisateur 100.

Le terminal 110 peut consister par exemple en un terminal de téléphonie VoIP, en un ordinateur, et notamment une tablette, ou en un terminal plus complexe, constitué par exemple d'un décodeur (ou Set-top Box (STB) selon la terminologie anglaise), d'un téléviseur et d'une télécommande destinée aux entrées de l'utilisateur 100.

Il peut s'agir d'un terminal mobile, muni d'un accès mobile 3G au réseau mobile VoIP, ou fixe.

Selon les modes d'implémentation de l'invention, l'étape de détermination 130 peut être mise en oeuvre de façon périodique, et/ou continue, en fonction par exemple de l'évolution des informations contextuelles du terminal 110. Dans le mode de réalisation représenté en figure 1, l'étape 130 est mise en oeuvre à l'aide d'un moteur contextuel prédictif situé sur un serveur d'applications distant, communiquant avec le terminal de communication 110 par le biais d'un réseau de communication, par exemple un réseau de type Internet ou encore un réseau local. Ce mode de réalisation offre l'avantage à un utilisateur de conserver un environnement proche de son environnement initial lorsqu'il change de terminal.

Dans d'autres modes de réalisation, la solution de l'invention peut être implémentée par un moteur contextuel prédictif situé sur le terminal lui-même. Ces modes de réalisation offrent l'avantage de permettre l'utilisation de l'invention, même lorsque le terminal n'est pas connecté à un réseau de communication. Dans encore d'autres modes de réalisation, le moteur contextuel prédictif peut être implémenté sur le terminal mais utiliser, s'il en a besoin, les ressources d'un serveur d'applications distant, lorsque le terminal est connecté à un réseau de communication.

Un des objectifs de l'invention est de permettre une anticipation des actions d'un utilisateur d'un terminal et la mise à sa disposition d'applications pertinentes vis-à-vis des informations contextuelles du terminal.

Un autre objectif est de permettre d'enrichir les interactions homme-machine en proposant de manière intuitive des enchaînements d'actions propres à simplifier les interactions entre les applications, tout en conservant un contexte de travail cohérent.

### 5.2 Exemple d'interface homme-machine

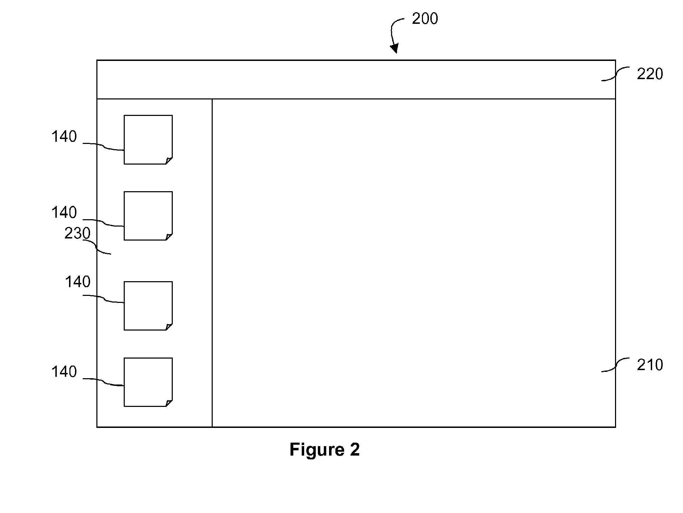

On présente en relation avec la **figure 2** un exemple d'une interface homme-machine selon la solution de l'invention. Dans ce mode de réalisation, l'interface 200 est découpée en plusieurs zones : d'une part, une fenêtre de travail 210, dans laquelle peut s'exécuter par exemple une application principale avec laquelle interagit par exemple l'utilisateur du terminal.

L'interface 200 peut comporter également un bandeau 220 de commandes. Enfin, dans le mode de réalisation illustré, les applications 140 mises à disposition de l'utilisateur par le procédé de l'invention sont regroupées dans une zone particulière 230 de l'écran, dite « zone de service », et présentées par exemple sous forme d'icônes graphiques.

Ce mode d'implémentation de l'invention offre l'avantage de mettre ces applications 140 de façon discrète à disposition de l'utilisateur au niveau de l'interface homme-machine, afin que le procédé ne soit pas perçu comme intrusif par l'utilisateur, tout en permettant un accès quasi-immédiat aux applications 140, notamment lorsqu'elles ont été lancées par le procédé de l'invention (par exemple, par un simple clic ou un passage de la souris sur une icône associée à une application). La zone de service est mise à jour en fonction de l'évolution des informations contextuelles du terminal.

Par exemple, lors de la consultation d'un message de messagerie instantanée dans la fenêtre principale, une application de type agenda électronique peut être lancée dans la zone de service. Dans cet agenda, sont affichés les rendez-vous à venir prévus avec l'émetteur du message. L'agenda de l'émetteur peut éventuellement être présenté. De plus, dans la zone de service, les derniers documents échangés sont également affichés, ainsi que les coordonnées téléphoniques et courriel de l'émetteur, les dernières fiches téléphoniques relatives à l'émetteur du message, etc... Ainsi, l'utilisateur dispose d'un ensemble d'applications, prêtes à être lancées ou déjà lancées, en lien avec son contexte, qui lui permettent simplement de positionner un nouveau rendez-vous, de classer un message ou une pièce jointe, de prendre connaissance du dernier document reçu ou envoyé, ou de joindre facilement son correspondant.

### 5.3 Description du fonctionnement dynamique du procédé de l'invention, dans un mode particulier de réalisation

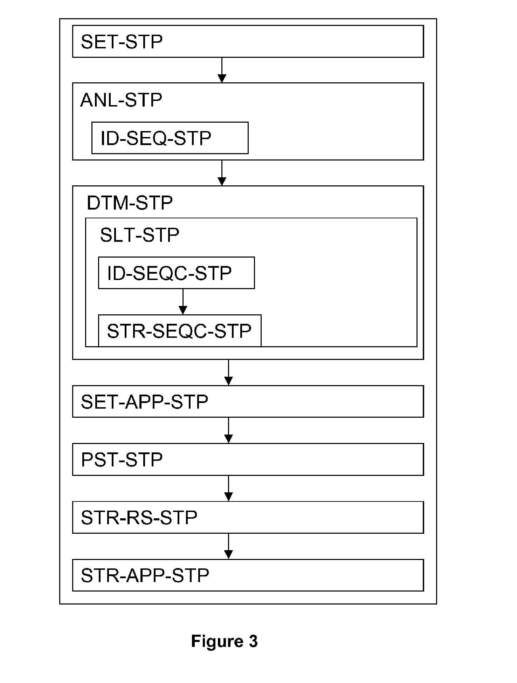

On décrit à présent en liaison avec la **figure 3**, les étapes du procédé de l'invention selon un mode particulier de réalisation.

Selon les modes de réalisation de l'invention, le procédé peut être mis en oeuvre périodiquement, au démarrage du terminal et/ou de façon évènementielle, par exemple lors de chaque action d'un utilisateur et/ou de chaque occurrence d'un événement généré par une application en cours d'exécution sur le terminal, ou encore lors d'une modification d'une information contextuelle du terminal.

Dans le mode de réalisation présentée en figure 3, le procédé comprend, comme évoqué en liaison avec la figure 1, une étape préalable SET-STP de paramétrage d'identifiants d'applications à lancer en association avec des informations contextuelles.

Selon l'invention, le procédé comprend une étape de détermination automatique DTM-STP des applications à mettre à disposition sur le terminal en fonction des informations contextuelles du terminal.

Les informations contextuelles du terminal peuvent comporter des informations relatives à un contexte physique du terminal, par exemple des informations « système » du terminal (comme ses capacités mémoire maximales, ses ressources mémoire disponibles, ses performances, la présence de périphériques d'entrée/sortie, son environnement réseau, sa localisation géographique), ou un paramétrage du terminal (comme un positionnement de l'option main libre, du volume des entrées/sorties audio...), ou des informations relatives à au moins une action effectuée sur le terminal par l'utilisateur (comme le décroché du combiné ou l'appui sur une touche).

En particulier, même quand le terminal est au repos, c'est-à-dire sans qu'aucune requête d'un utilisateur soit en cours d'exécution, ou dans certains états particuliers (par exemple un déplacement physique du terminal), le procédé de l'invention peut permettre à un utilisateur de disposer en permanence, d'un ensemble d'applications, comme des indicateurs (indicateurs métier ou boursier, horloge, indicateur météo...), ou des applications diffusant des informations en temps réel (flux audio ou vidéo, flux RSS, navigation GPS) ou des applications de communication avec des tiers (messagerie instantanée, courriel...).

Les informations contextuelles utilisées par l'étape de détermination DTM-STP peuvent également être liées au contexte applicatif d'une application en cours d'exécution sur le terminal, et inclure notamment des informations concernant le type de l'application utilisée (messagerie instantanée, téléphonie, courriels, horloge, agenda électronique...), des caractéristiques « système » de l'application, comme les capacités du terminal nécessaires au bon déroulement de l'application.

Enfin, certaines informations contextuelles du terminal peuvent être relatives au contexte communautaire du terminal (un environnement réseau du terminal par exemple) ou d'une application s'exécutant sur le terminal et mettant en jeu un ensemble d'individus ou de terminaux.

Ainsi, l'invention permet de tenir compte d'une communauté de contacts de l'utilisateur, avec qui l'utilisateur est susceptible d'avoir un lien au cours de l'exécution d'une application. Il peut par exemple s'agir des n contacts avec qui l'utilisateur a été le plus récemment ou le plus fréquemment en relation, globalement ou en lien avec une application particulière.

Dans le mode de réalisation décrit en figure 3, le procédé peut de plus comprendre une étape d'analyse syntaxique et/ou sémantique ANL-STP d'un événement se produisant sur le terminal, notamment une requête de l'utilisateur 100 ou un évènement occurrent signalé sur le terminal 110 par des applications en cours d'exécution (par exemple lors de la réception d'un courriel), pour générer au moins une information contextuelle du terminal. Cette étape peut en particulier être exécutée préalablement ou lors de l'étape de détermination DTM-STP, de façon à enrichir les informations contextuelles disponibles lors de l'étape de détermination.

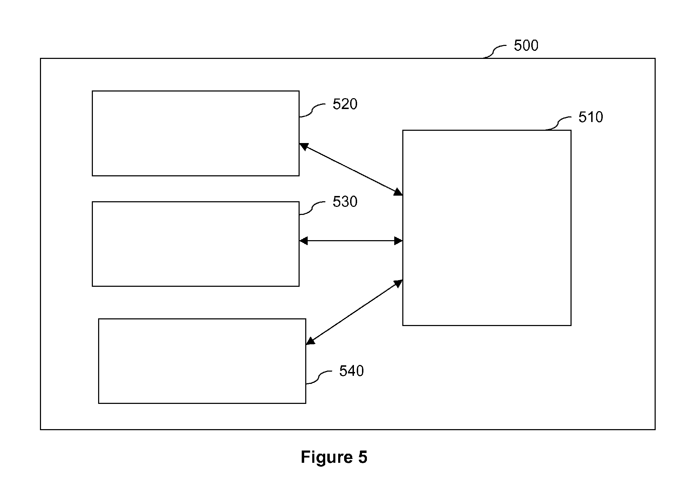

Ainsi, l'étape d'analyse syntaxique et/ou sémantique ANL-STP permet de collecter certaines informations renseignées ou validées par l'utilisateur, par exemple un identifiant d'un destinataire d'un courriel ou un événement à mémoriser dans un agenda électronique. Une analyse des actions de l'utilisateur peut en particulier être mise en oeuvre par un module d'analyse des requêtes et des évènements, tel que décrit plus bas en relation avec la figure 5 et s'appuyer sur une base de données de prédicat.

Par exemple l'analyse d'un courriel d'objet « Organisation réunion projet X, le 13/05/11, au Centre R&D Y de Rennes » peut permettre d'en extraire des mots clés (« organisation », « réunion », « projet X ») qui seront ensuite utilisés pour déterminer les applications à mettre à disposition de l'utilisateur.

Dans certains modes de réalisation, l'étape d'analyse ANL-STP comprend également une étape de stockage ID_SEQ_STP des informations contextuelles du terminal. Ce mode de réalisation permet de cette façon de disposer d'un historique des applications mises à disposition sur le terminal ainsi que d'informations contextuelles associées. Dans des modes de réalisation particuliers, l'ensemble des informations contextuelles collectées est stocké lors de chaque analyse, dans d'autres modes de réalisation, permettant une consommation mémoire moins importante, seules sont stockées les informations contextuelles ayant évolué depuis la dernière mémorisation effectuée.

Dans certains modes particuliers de réalisation, l'étape de stockage ID_SEQ_STP peut également comprendre une étape de détection de nouvelles séquences d'applications fréquemment consécutives, en liaison avec un mot clé, et ainsi de mémoriser de nouvelles séquences d'applications.

Dans le mode de réalisation décrit en figure 3, l'étape de détermination DTM-STP d'une application à mettre à disposition comprend ensuite une étape de sélection SLT_STP dans au moins une table de correspondance d'au moins une application associée à au moins une des informations contextuelles du terminal.

Selon les modes de réalisation, il peut s'agir d'une ou plusieurs tables de correspondance locales au terminal, et/ou d'une ou plusieurs tables de correspondance distantes, telles que des bases de données, situées sur un ou plusieurs serveurs informatiques. De telles tables de correspondance peuvent être dédiées au terminal ou également inclure des informations concernant une pluralité de terminaux. Dans certains modes de réalisation, où plusieurs bases de données sont utilisées, certaines bases de données peuvent être dédiées au profil d'au moins un utilisateur, d'autres peuvent contenir des préférences paramétrées par l'utilisateur et/ou des usages détectés de l'utilisateur et d'autres encore peuvent constituer des bases de prédicats.

L'étape de sélection SLT_STP permet d'obtenir à partir de certaines informations contextuelles du terminal un ensemble d'applications potentiellement adaptées à l'activité courante de l'utilisateur du terminal. Cette étape de sélection peut en particulier utiliser les critères de sélections usuels des systèmes de gestion de bases de données. Ces critères de tri pourront être définis de façon plus précise lors de l'étape de paramétrage préalable SET-STP.

Ainsi, on pourra choisir de proposer toutes les applications associées à chaque information contextuelle (« OU » logique). Par exemple, le mot-clé « Réunion » pourra permettre de sélectionner à la fois une application associée au mot-clé « Organisation réunion » et une application associée au mot-clé « Compte-rendu réunion ».

On pourra au contraire préférer proposer les applications associées à plusieurs informations contextuelles (« ET » logique). Ainsi, la combinaison des mots clés « réunion » et « projet X » pourra permettre de sélectionner les applications relatives à des réunions dans le cadre du projet X.

En particulier, l'étape de sélection SLT-STP peut comprendre une étape d'identification ID-SEQC-STP - sur la base d'au moins une information contextuelle, notamment d'au moins un mot clé obtenu lors de l'étape d'analyse - d'au moins une séquence prédéterminée d'applications, ainsi qu'une étape de mémorisation STR-SEQC-STP d'une information contextuelle représentative de l'exécution en cours de la séquence. L'information contextuelle mémorisée peut comprendre en sus de l'information contextuelle associée à la séquence, des informations complémentaires, permettant de tenir compte de l'ordonnancement des applications dans la séquence. Ces informations complémentaires permettent ainsi par exemple le positionnement d'un automate d'états, pour la sélection des applications à présenter.

L'étape de sélection SLT-STP peut également permettre de sélectionner un groupe de contacts particulier de l'utilisateur ou d'un contact particulier (par exemple un assistant), grâce à une information contextuelle systématiquement associée à certaines applications ou séquences d'applications, s'exécutant sur le terminal.

L'étape de sélection SLT-STP peut tenir compte d'autres critères, par exemple d'un indicateur de pertinence (« relevancy score » en langue anglaise), préalablement mémorisé, d'une application. Cet indicateur peut par exemple avoir été mémorisé au cours de l'étape de mémorisation STR-RS-STP, décrite plus bas.

Dans le mode de réalisation décrit en figure 3, l'étape de détermination DTM-STP peut être suivie d'une étape de paramétrage SET-APP-STP de l'application à mettre à disposition grâce aux informations contextuelles du terminal, et notamment de celles générées lors de l'étape d'analyse sémantique ANL-STP. Ce paramétrage peut également inclure des informations contextuelles mémorisées lors de l'étape de stockage ID-SEQ-STP.

Le procédé de l'invention comprend de plus une étape de présentation PST-STP des applications sélectionnées lors de l'étape de sélection SLT-STP.

Il peut s'agir d'une présentation sous forme d'une interface graphique telle qu'illustrée en figure 2 par exemple. Les applications peuvent être simplement proposées à l'utilisateur ou déjà lancées (par exemple dans le cas d'un calendrier).

Enfin, dans le mode de réalisation présenté, le procédé comprend également une étape de mémorisation STR-RS-STP d'un indicateur de pertinence des applications présentées. La pertinence d'une application peut être évaluée selon différents critères, éventuellement paramétrables préalablement, tenant compte par exemple, d'un usage effectif de l'application par l'utilisateur, de sa durée d'utilisation, du nombre de fois où elle a été utilisée, ou au contraire d'une fermeture immédiate de l'application, qui peut signifier une incompatibilité par rapport à des applications déjà lancées ou un refus de cette application par l'utilisateur.

Dans certains modes de réalisation éventuellement distincts ou complémentaires, le procédé comprend une étape de mémorisation STR-APP-STP, dans une table de correspondance utilisée lors de l'étape de sélection, d'un identifiant d'une application s'exécutant sur le terminal, en association avec au moins une des informations contextuelles du terminal. Cette étape de mémorisation STR-APP-STP permet ainsi d'enrichir la table de correspondance avec des applications lancées manuellement par un utilisateur, et ainsi de pouvoir ultérieurement proposer automatiquement ces applications, afin de mieux s'adapter aux souhaits de l'utilisateur. Cette étape permet donc un apprentissage itératif. Lors de cette étape de mémorisation STR-APP-STP, peut être mise en oeuvre une étape de mémorisation, non représentée en figure 3, d'au moins un paramètre de l'application, qui pourra être utilisé lors d'un lancement ultérieur de l'application mémorisée.

### 5.4 Structure d'un terminal de communication adapté à la mise en oeuvre du procédé de mise à disposition, selon l'invention

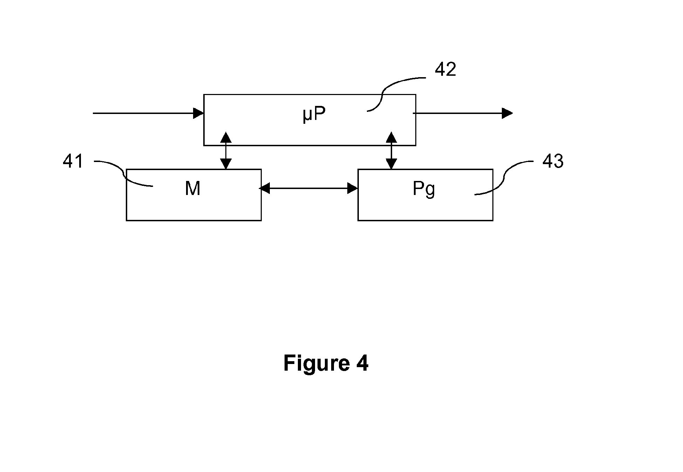

On présente, en relation avec la **figure 4**, la structure simplifiée d'un terminal de communication connectable à un réseau de communication.

Un tel terminal comprend une mémoire 41 comprenant une mémoire tampon, une unité de traitement 42, équipée par exemple d'un microprocesseur µP, et pilotée par un programme d'ordinateur 43, dont l'exécution met en oeuvre un procédé de mise à disposition selon l'invention.

A l'initialisation, les instructions de code du programme d'ordinateur 43 sont par exemple chargées dans une mémoire RAM avant d'être exécutées par le processeur de l'unité de traitement 42.

Le microprocesseur de l'unité de traitement 42 met en oeuvre les étapes du procédé de mise à disposition décrit précédemment, selon les instructions du programme d'ordinateur 43. Le terminal de communication comprend ainsi, outre la mémoire tampon 41, des moyens de détermination automatique d'au moins une application à mettre à disposition en fonction d'au moins une information contextuelle du terminal.

Ces moyens sont pilotés par le microprocesseur de l'unité de traitement 42.

Dans certains modes de réalisation, le terminal peut également comprendre des moyens supplémentaires de collectes d'informations contextuelles, notamment des moyens matériels et/ou logiciels de communication en champ proche, comme des lecteurs de tag RFID, permettant d'obtenir et de collecter des informations sur l'environnement physique du terminal, grâce à des tags RFID présents dans cet environnement (par exemple, en relation avec les terminaux proches du terminal, ou les meubles qui l'entourent). Le terminal peut également comprendre un module de localisation géographique tel qu'un module GPS, des sondes bureautiques ou sociales, des systèmes d'analyse complémentaires, un équipement de détection de périphériques.

### 5.5 Exemple de découpage fonctionnel du moteur contextuel de l'invention

Comme illustré en **figure 5**, les éléments matériels et logiciels précités sont mis en oeuvre, selon un mode de réalisation de l'invention, grâce à un moteur contextuel prédictif, qui se place en intermédiaire entre l'interface homme-machine du terminal et les applications à mettre à disposition. Le moteur reçoit notamment les actions effectuées sur le terminal ou les évènements de sortie sur le terminal, les analyse et interagit en conséquence, en fonction de règles prédéfinies, sur l'interface et les applications à proposer et/ou à exécuter.

Dans le mode de réalisation détaillé en figure 5, le moteur contextuel prédictif 500 est composé d'un ensemble de modules, dont un analyseur de requêtes et d'événements 510, un module d'analyse de comportement 520, un moteur d'inférence 530 et un moteur de push contextuel 540.

L'analyseur de requêtes et d'événements 510 analyse les requêtes effectuées depuis le terminal ou les évènements de sortie sur le terminal, et les transmet aux autres modules.

Le module d'analyse de comportement 520 détermine, à partir des informations reçues de l'analyseur de requêtes et d'événements 510, des enchaînements logiques d'actions de l'utilisateur, sur au moins une application, ou une utilisation conjointe de plusieurs applications ou un basculement d'une utilisation d'une première application à une seconde application. Le module d'analyse de comportement construit ainsi des séquences d'applications ordonnées, qu'il mémorise ensuite.

Le moteur d'inférence 530 permet de déterminer un ou des enchaînements d'applications à mettre à disposition. Ce moteur peut par exemple fonctionner comme un automate d'états. Il reçoit, en entrée, des informations de l'analyseur de requêtes et d'événements 510 et les traite ensuite en fonction des informations mémorisées dans les tables de correspondance, par exemple des bases de données contenant le profil de l'utilisateur, les préférences et usages de l'utilisateur et les prédicats à appliquer.

Il en déduit un ensemble d'applications qui seront proposées à l'utilisateur de manière contextualisée par le module de push contextuel 540.

Le moteur de push contextuel 540 interagit avec l'interface client en mettant à disposition (par exemple dans la zone de service de l'interface homme-machine représentée en figure 2) les applications appropriées qui ont été sélectionnées grâce au moteur d'inférence 530.

Ces applications sont initialisées en fonction des informations contextuelles du terminal (par exemple dans la zone de service illustrée en figure 2) et notamment en fonction du contexte applicatif d'une application en cours d'exécution sur le terminal : par exemple une application de messagerie peut proposer un moyen de réponse à l'émetteur d'un message, comme un courriel pré-rempli, prenant en compte sa disponibilité au travers de ses préférences ou de sa présence, un gestionnaire de fichier peut être positionné sur un répertoire approprié, un répertoire téléphonique peut afficher la fiche correspondant à la personne à l'origine d'un appel en cours ou d'un courriel en cours de lecture.

## Revendications

1. Procédé de mise à disposition d'au moins une application (140) sur un terminal de communication (110), ledit procédé étant **caractérisé en ce qu'**il comprend une étape de détermination automatique (130, DTM-STP) d'au moins une application (140) en fonction d'au moins une information contextuelle dudit terminal (110), ladite au moins une information contextuelle étant obtenue à partir d'un contexte physique dudit terminal, et/ou d'un contexte relatif à une application en cours d'exécution sur le terminal, et/ou d'un contexte communautaire du terminal.

2. Procédé de mise à disposition selon la revendication 1, **caractérisé en ce qu'**il comprend une étape d'analyse syntaxique et/ou sémantique (ANL-STP) d'au moins un événement se produisant sur ledit terminal (110), pour générer au moins une information contextuelle dudit terminal (110).

3. Procédé de mise à disposition selon la revendication 1 **caractérisé en ce que** ladite étape de détermination (130, DTM-STP) d'une application (140) comprend une étape de sélection (SLT-STP) dans au moins une table de correspondance d'au moins une application associée à au moins une desdites informations contextuelles.

4. Procédé de mise à disposition selon la revendication 3, **caractérisé en ce que** ladite étape de sélection (SLT-STP) comprend :
- une étape d'identification, sur la base d'au moins une desdites informations contextuelles, d'une exécution d'au moins une séquence prédéterminée d'applications ;
- une étape de mémorisation d'au moins une information contextuelle représentative de l'exécution de ladite séquence, fonction de l'ordonnancement, dans ladite séquence, desdites applications de ladite séquence.

5. Procédé de mise à disposition selon l'une des revendications 3 ou 4 **caractérisé en ce qu'**il comprend :
- une étape de présentation (PST-STP) de ladite application sélectionnée lors de ladite étape de sélection (SLT-STP);
- une étape de mémorisation (STR-RS-STP) d'un indicateur de pertinence de l'application présentée (140), en relation avec ladite au moins une information contextuelle dudit terminal (110).

6. Procédé de mise à disposition selon la revendication 5 **caractérisé en ce que** ladite étape de sélection (SLT-STP) tient compte d'au moins un indicateur de pertinence préalablement mémorisé.

7. Procédé de mise à disposition selon la revendication 1 **caractérisé en ce qu'**il comprend en outre une étape de paramétrage automatique (SET-APP-STP) de l'application (140) à mettre à disposition, en fonction d'au moins une desdites informations contextuelles.

8. Procédé de mise à disposition selon la revendication 3 **caractérisé en ce qu'**il comprend en outre une étape de mémorisation (STR-APP-STP) dans ladite table de correspondance d'au moins un identifiant d'une application en cours d'exécution sur ledit terminal (110), en association avec au moins une desdites informations contextuelles.

9. **Terminal** de communication (110) comprenant des moyens de mise à disposition d'au moins une application (140), **caractérisé en ce qu'**il comprend en outre des moyens de détermination automatique d'au moins une application (140) en fonction d'au moins une information contextuelle dudit terminal (110), ladite au moins une information contextuelle étant obtenue à partir d'un contexte physique dudit terminal, et/ou d'un contexte relatif à une application en cours d'exécution sur le terminal, et/ou d'un contexte communautaire du terminal..

10. **Serveur** comportant des moyens de mise à disposition d'au moins une application (140) sur au moins un terminal de communication (110), **caractérisé en ce qu'**il comprend en outre des moyens de détermination automatique d'au moins une application (140) en fonction d'au moins une information contextuelle dudit terminal (110), ladite au moins une information contextuelle étant obtenue à partir d'un contexte physique dudit terminal, et/ou d'un contexte relatif à une application en cours d'exécution sur le terminal, et/ou d'un contexte communautaire du terminal.

11. **Système** comprenant une communauté de terminaux et un serveur, ledit serveur comportant des moyens de mise à disposition d'au moins une application (140) sur au moins un desdits terminaux de communication (110), **caractérisé en ce qu'**il comprend en outre des moyens de détermination automatique d'au moins une application (140) en fonction d'au moins une information contextuelle dudit terminal (110), ladite au moins une information contextuelle étant obtenue à partir d'un contexte physique dudit terminal, et/ou d'un contexte relatif à une application en cours d'exécution sur le terminal, et/ou d'un contexte communautaire du terminal.

12. **Programme d'ordinateur caractérisé en ce qu'**il comprend des instructions de code de programme pour la mise en oeuvre d'un procédé de mise à disposition, selon l'une quelconque des revendications 1 à 8, lorsque ce programme est exécuté par un processeur.
